# EUROPEAN PATENT APPLICATION

(11) **EP 2 595 303 A1**
(43) Date of publication of application: **22.05.2013**
(21) Application number: 11806711.5
(22) Date of filing: 08.07.2011
(51) Int. Cl.: H02M 7/497, H02M 7/48, H02P 27/06

(54) **POWER CONVERSION SYSTEM**

(30) Priority: 13.07.2010 JP 2010158419
(71) Applicant: Nissan Motor Co., Ltd, Yokohama-shi, Kanagawa 221-0023 (JP)
(72) Inventor: MIZUKOSHI, Yukio, Kanagawa 243-0123 (JP); MINAGAWA, Yusuke, Kanagawa 243-0123 (JP); SASAKI, Kensuke, Kanagawa 243-0123 (JP)
(74) Representative: Grünecker, Kinkeldey, Stockmair & Schwanhäusser
(86) International application number: PCT/JP2011/065701
(87) International publication number: WO 2012/008381

(57) **Abstract**

A power conversion system as an aspect of the present invention includes: a power converter using a plurality of legs to convert inputted electric power and output powers in a plurality of phases, each leg including upper and lower arms; and a controller 30 controlling the upper and lower arms of each leg to control pulse current flowing through the leg. The controller 30 calculates a duty ratio instruction of each leg in one control period for each phase and, concerning first and second legs among the plurality of legs provided for a certain one of the phases, changes the phase of the calculated duty ratio instruction so that a time period when positive pulse current flows through the first leg and a time period when negative pulse flows through the second leg overlap each other in the one control period.

## Description

### TECHNICAL FIELD

The present invention relates to a power conversion system which converts inputted electric power to outputs in plural different phases.

### BACKGROUND ART

As one of conventional power conversion systems, a motor control system which supplies output power to a polyphase motor is known. Patent Literature 1 discloses a power conversion system including six three-phase inverters. In this power conversion system, a pulse generator compares instruction values with referential values which periodically change and then supplies driving signals corresponding to respective phases to each of the six inverters. In this case, the phases of the referential values for the respective inverters periodically changing are offset from each other. This can reduce vibrating current of a DC common wiring section.

### CITATION LIST

### PATENT LITERATURE

Patent Literature 1: Japanese Patent Unexamined Publication No. 2008-099436

### SUMMARY OF INVENTION

However, in the case where power of a same phase is converted by plural inverters like the method disclosed by PTL 1, the periods when the upper or lower arm in the legs of the same phase is turned on overlap each other in some cases. The currents flowing through the legs in the positive or negative direction are superimposed on each other, thus causing a disadvantage of an increase in ripple current.

The present invention was made in the light of the aforementioned circumstances, and an object of the present invention is to reduce ripple current in a polyphase power converter including plural legs for each phase.

In order to solve the aforementioned problems, according to the present invention, concerning first and second legs among a plurality of legs included in a certain phase constituting a power converter, the time period when positive pulse current flows through the first leg and the time period when negative pulse current flows through the second leg overlap each other in one control period.

According to the present invention, by constituting a same phase of a plurality of legs, the operating current of each leg can be reduced, and ripple current can be reduced. Moreover, in one control period of a same phase, positive pulse current flowing through a certain leg and negative pulse current flowing through another leg overlap each other in timing. Accordingly, it is prevented that currents in the same direction are superimposed on each other. It is therefore possible to reduce ripple current.

### BRIEF DESCRIPTION OF DRAWINGS

[Fig. 1] Fig. 1 is an explanatory view schematically showing the entire configuration of a motor control system according to a first embodiment.
[Fig. 2] Figs. 2(a) and 2(b) are explanatory views showing a configuration of an electro-mechanical motor, Fig. 2(a) illustrating a detailed configuration of a motor 10, Fig. 2(b) illustrating a detailed circuit configuration of an inverter 20.
[Fig. 3] Fig. 3 is a block diagram schematically showing a configuration of a controller 30.
[Fig. 4] Fig. 4 is an explanatory view showing transition of each phase current.
[Fig. 5] Fig. 5 is an explanatory view showing transition of pulse currents flowing though each phase and each leg in one control period at a time A shown in Fig. 4.
[Fig. 6] Fig. 6 is an explanatory view showing transition of pulse currents concerning a control mode in which carrier phase is shifted as an example comparative to the control mode according to the first embodiment.
[Fig. 7] Figs. 7(a) to 7(c) are explanatory views showing superimposition of currents of the legs when the duty ratio is 50%, Fig. 7(a) showing a case of an inverter including a leg for each of three phases, Fig. 7(b) showing a case where an inverter includes four legs for each of three phases and the phase of a duty ratio instruction for each leg is not changed, and Fig. 7(c) showing a case where an inverter includes four legs for each of three phases and the phase of the duty ratio instruction of each leg is changed.
[Fig. 8] Fig. 8 is an explanatory view showing a configuration of an inverter 20 according to a second embodiment.
[Fig. 9] Fig. 9 is an explanatory view showing transition of pulse currents flowing through each phase and each leg in one control period at a certain time.

### DESCRIPTION OF EMBODIMENTS

### (First Embodiment)

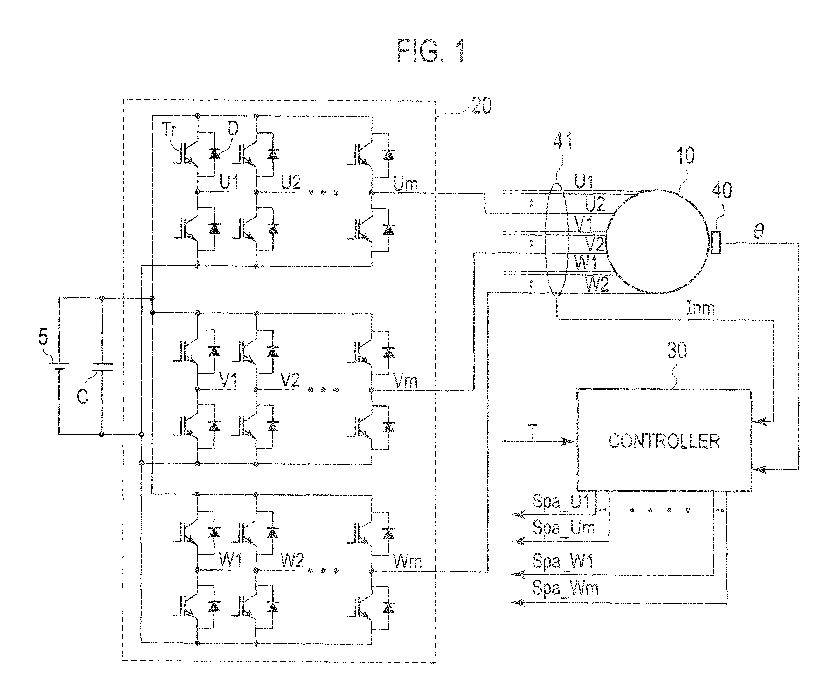

Fig. 1 is an explanatory view schematically showing an entire configuration of a motor control system according to a first embodiment. The motor control system according to the first embodiment is a motor control system controlling a driving motor of an electric vehicle. This motor control system mainly includes a motor 10, an inverter 20 as a power converter, and a controller 30.

The motor 10 mainly includes a rotor and a stator. The motor 10 is a permanent magnet synchronous motor including n-phase (n: a natural number not less than 1) phase windings connected in a star configuration around a neutral point, the phase windings being wound around teeth of the stator (in this embodiment, a three-phase motor having phases U, V, and W (n=3)). In this embodiment, each phase winding is divided into m parts according to the number of slots of the motor 10. The windings concerning a same phase are properly wound around predetermined stator cores. Hereinafter, m sets of elements of the phase U (the winding and later-described legs) are indicated as phases U1, U2, ..., Um, and m sets of elements of the phases V and W are indicated as phases V1, V2, ..., Vm and phases W1, W2, ..., Wm, respectively.

The motor 10 is driven by an interaction between a magnetic field generated by three-phase alternating current power supplied from a later-described inverter 20 to the respective phase windings and a magnetic field generated by permanent magnets of the rotor. The rotor and output shaft joined thereto are therefore rotated. The output shaft of the motor 10 is joined to an automatic transmission of an electric vehicle, for example.

The inverter 20 is connected to a power supply 5. The inverter 20 converts DC power received from the power supply 5 to AC powers and supplies the same to the motor 10. The AC powers are generated by each phase. The AC powers of respective phases generated by the inverter 20 are individually supplied to the motor 10. The input side of the inverter 20 is connected to the power supply 5 through a smoothing capacitor C.

The inverter 20 includes m legs connected in parallel for each of the phases U, V, and W. Specifically, the phase U includes m legs corresponding to the phases U1 to Um, the legs being connected in parallel. In a similar manner, the phase V (phase W) includes m legs corresponding to the phases V1 (W1) to Vm (Wm), the legs being connected in parallel. Each of the legs of each phase includes an upper arm connected to a bus on the positive side of the power supply 5 and a lower arm connected to the negative side of the power supply 5, the upper and lower arms being connected in series. Each of the arms constituting each leg mainly includes a semiconductor switch capable of controlling one-way conduction (a switching element such as a transistor including IGBT, for example). The semiconductor switch is connected to a freewheeling diode in inverse parallel.

The on/off state of each arm, or the on/off state of each semiconductor switch (switching operation) is controlled through a driving signal outputted from the controller 30. The semiconductor switch constituting each arm is turned on by the driving signal from the controller 30 into conduction and turned off into non-conduction (the cutoff state).

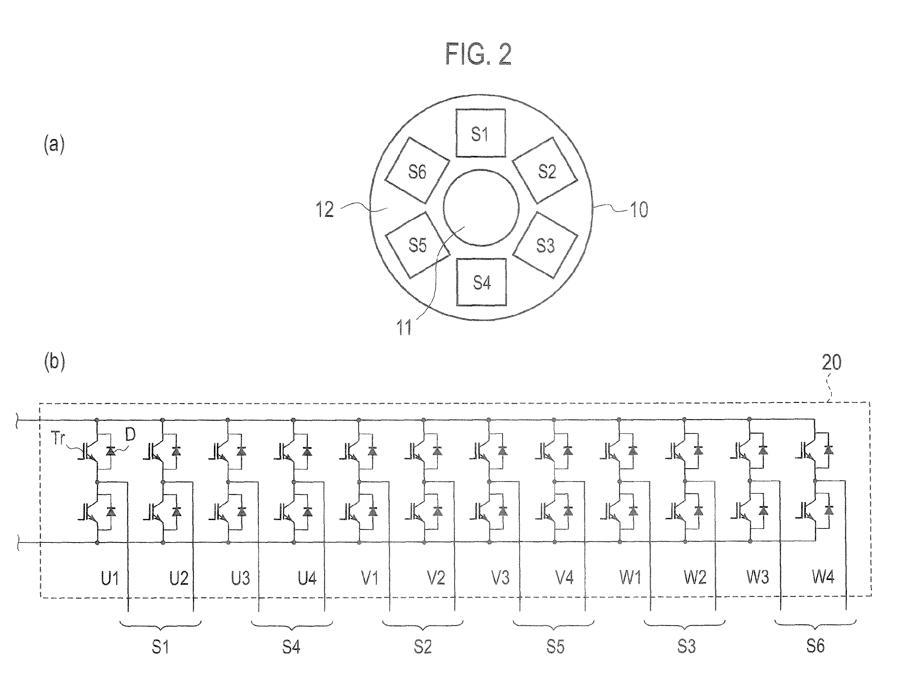

In the first embodiment, the motor 10 and the power converter (inverter 20) are integrated and implemented as an electro-mechanical motor. For example, as shown in Fig. 2(a), in the three-phase motor 10, a stator 12 located around the outer periphery of the rotor 11 includes six slots S1 to S6. By taking out two wirings from each of the slots S to S6, the motor 10 is connected to four legs of each phase, that is, 12 legs (the integral multiple of the number of slots) in all.

Referring back to Fig. 1, the controller 30 controls the switching operation of the inverter 20 to control the output torque of the motor 10. The controller 30 can be composed of a microcomputer mainly including a CPU, a ROM, a RAM, and an I/O interface. The controller 30 performs operations to control the inverter 20 according to a control program stored in the ROM. The controller 30 outputs control signals (driving signals) calculated by the above operations to the inverter 20.

The controller 30 receives sensor signals detected by various sensors. position sensor (a resolver, for example) 40 is attached to the motor 10 and detects an electric, phase (electric angle) θ through positional information indicating the rotor position of the motor 10. Moreover, a current sensor 41 is a sensor detecting actual current flowing through each phase. Specifically, the current sensor 41 detects actual currents flowing through m phase-windings of each phase (hereinafter, collectively referred to as actual currents Inm).

The controller 30 controls the switching operation of the inverter 20, that is, controls on/off states of the upper and lower arms constituting each leg on a phase-by-phase basis by a control method such as PWM wave voltage drive. The PWM wave voltage drive is a method of generating PWM wave voltage from DC voltage by PWM control and applying the generated PWM wave voltage to the motor 10. Specifically, the PWM wave voltage drive is a driving method of calculating a duty ratio instruction value based on the carrier signal and voltage instruction value of each phase at each control period to apply an equivalent sinusoidal AC voltage to the motor 10.

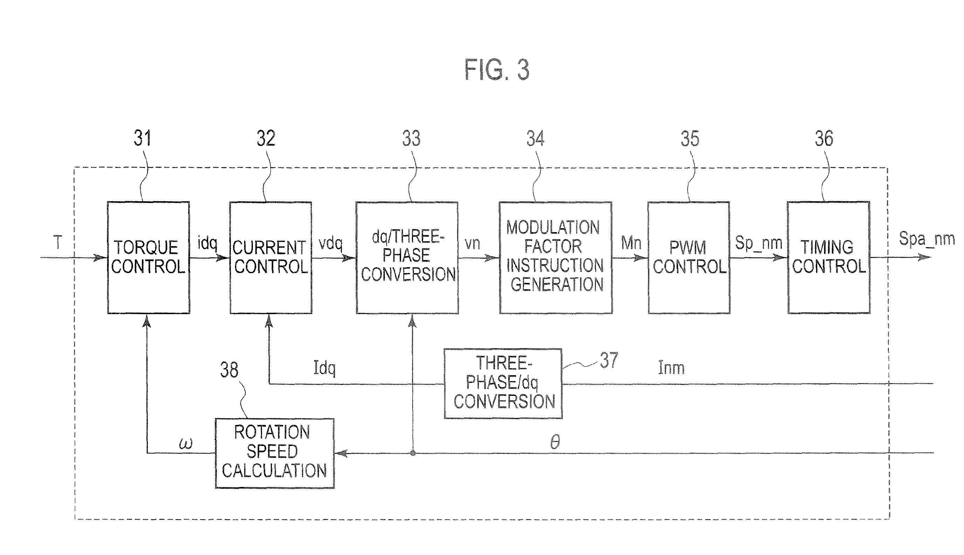

Fig. 3 is a block diagram schematically showing a configuration of the controller 30. From a functional perspective, the controller 30 includes a torque control unit 31, a current control unit 32, a dq/three-phase conversion unit 33, a modulation factor instruction generation unit 34, a PWM control unit 35, a timing control unit 36, a three-phase/dq conversion unit 37, and a rotation speed calculation unit 38.

Based on a torque instruction T given from the outside (from a controller of a vehicle, for example) and a motor rotation speed ω, the torque control unit 31 calculates a d-axis current instruction and a q-axis current instruction corresponding to the given torque instruction T (collectively referred to as a dq-axis current instruction idq). The torque control unit 31 holds a map defining the relations between a torque instruction value T or motor rotation speed ω and the dq-axis current instruction idq. These relations are previously acquired by experiments and simulations in consideration of the characteristics of the motor 10 and the like. The torque control unit 31 refers to the map and calculates the dq-axis current instruction idq. The calculated dq-axis current instruction idq is outputted to the current control unit 32. Herein, the motor rotation speed ω which is necessary to calculate the dq-axis current instruction idq can be obtained as the result of calculation by the rotation speed calculation unit 37. This rotation speed calculation unit 37 calculates the electric angular speed, that is, the motor rotation speed ω by differentiating the electric angle θ, which is detected by the position sensor 40, with respect to time.

The current control unit 32 first calculates the d-axis and q-axis current deviations. To be specific, in addition to the dq-axis instruction idq, the current control unit 32 receives the d-axis actual current and q-axis actual current corresponding to the three-phase actual current Inm (collectively referred to as dq-axis actual currents Idq). Herein, the dq axis actual currents Idq are calculated in such a manner that the three-phase/dq conversion unit 38 performs coordinate conversion for the three-phase actual currents Inm based on the electric angle θ detected by the position sensor 40. The current control unit 32 calculates the d-axis and q-axis current deviations by subtracting the dq-axis actual currents Idq from the dq-axis current instructions idq for the d-axis and q-axis. The current control unit 32 uses PI control, for example, to calculate the d-axis and q-axis voltage instructions (collectively referred to as dq-axis voltage instructions Vdq) so that the d-axis and q-axis current deviations are 0. The calculated dq-axis voltage instructions Vdq are outputted to the dq/three-phase conversion unit 33.

The dq/three-phase conversion unit 33 refers to the electric angle θ detected by the position sensor 40 to perform coordinate conversion from the dq-axis voltage instructions vdq to voltage instructions corresponding to the three phases, or a U-phase voltage instruction, a V-phase voltage instruction, and a W-phase voltage instruction (collectively referred to as three-phase voltage instruction vn). The three-phase voltage instructions vn are individually outputted to the modulation factor generation unit 34.

The modulation factor generation unit 34 standardizes the three-phase voltage instructions vn with the power supply voltage to calculate modulation factor instructions of the respective phases, a U-phase modulation factor instruction, a V-phase modulation factor instruction, and a W-phase modulation factor instruction (collectively referred to as three-phase modulation factor instructions Mn). The calculated three-phase modulation factor instructions Man are outputted to the PWM control unit 35.

The PWM control unit 35 compares the signal level of the carrier signal periodically varying, such as a triangular wave, and the thee-phase modulation factor instruction Mn at each control period. Based on the comparison results, the PWM control unit 35 generates driving signals to turn on/off the semiconductor switches of the inverter 20. To be specific, if the signal level of a carrier signal is lower than the three-phase modulation factor instruction Mn, the PWM control unit 35 outputs a driving signal to turn on the corresponding upper arm and a driving signal to turn off the corresponding lower arm. On the other hand, if the signal level of a carrier signal is higher than the three-phase modulation factor instruction Mn, the PWM control unit 35 outputs a driving signal to turn off the corresponding upper arm and a driving signal to turn on the corresponding lower arm. In other words, each driving signal corresponds to a duty ratio instruction for a leg (the semiconductor switches of the upper and lower arms) in one control period and is generated for each phase. In the first embodiment, since each phase is composed of m legs, the driving signal of each phase is divided into m signals, and driving signals Sp_nm corresponding to the m legs are generated for each phase. The generated driving signals Sp_nm are outputted to the timing control unit 36. In order to prevent that the semiconductor switches of the upper and lower arms are simultaneously turned on, the PWM control unit 35 can set a dead time, that is, a time period when both of the semiconductor switches of a leg are off, between the end of on operation of the semiconductor switch of one of the upper and lower arms (off timing) and the start of on operation of the semiconductor switch of the other arm (on timing).

The timing control unit 36 changes the phase of the driving signal Sp_nm at least one of the m legs of a same phase in one or some of the phases U, V, and W. As one of the characteristics of the first embodiment, concerning first and second legs among the m legs provided for a certain phase, the timing control unit 36 changes the phase of the duty ratio instruction of the first or second leg so that in one control period, a time period when positive pulse current flows through the first leg and a time period when negative pulse current flows through the second leg overlap each other. In other words, the positive pulse current flowing through the first leg and the negative pulse current flowing through the second leg overlap each other in timing. Hereinafter, a description is given of the phase change of the timing control unit 36 in detail.

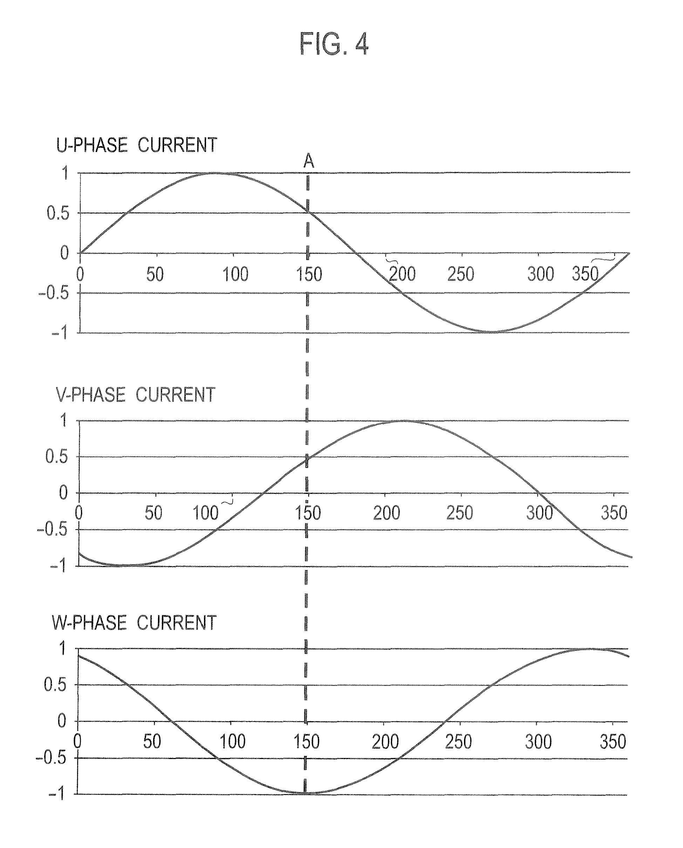

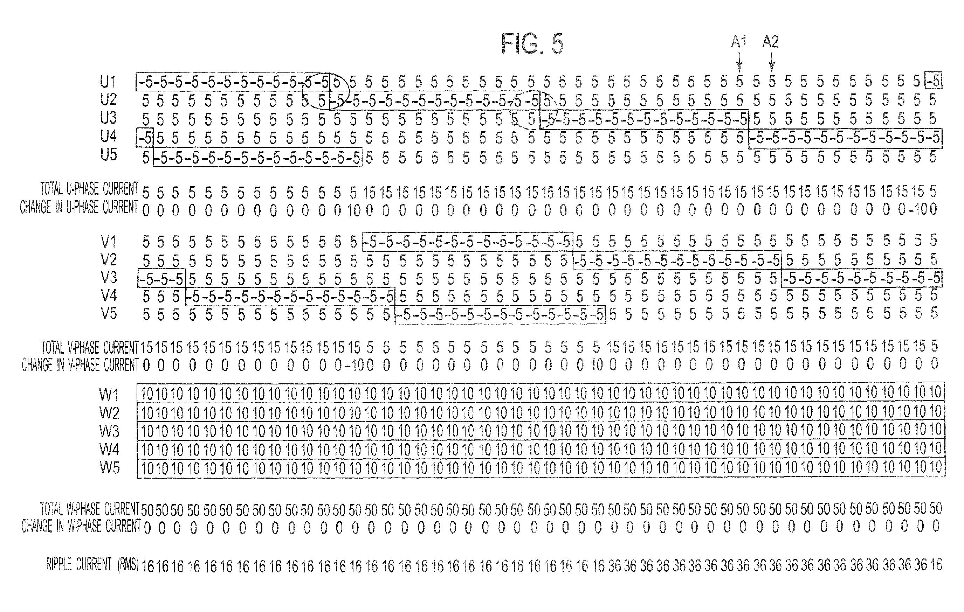

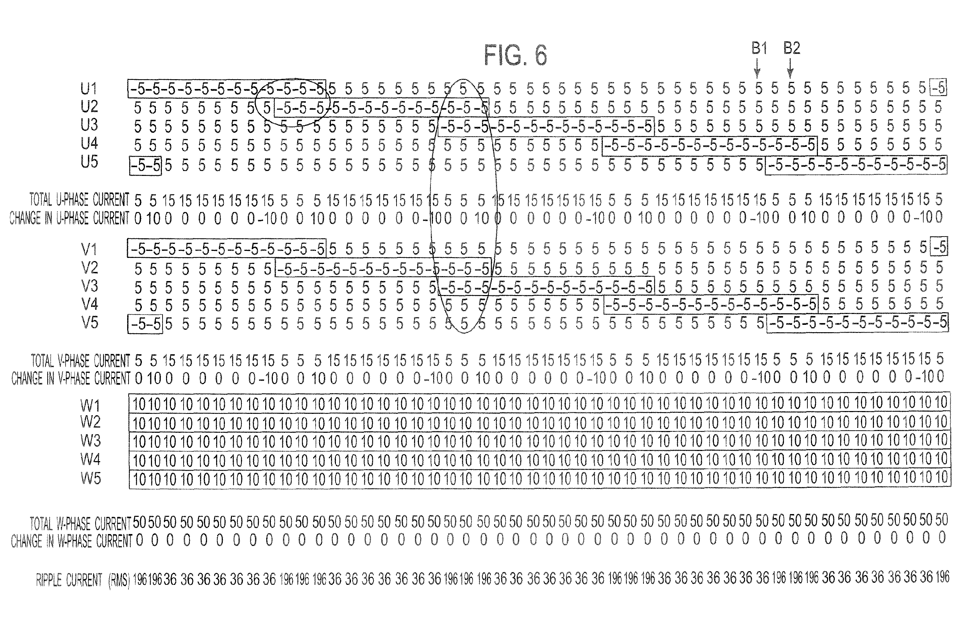

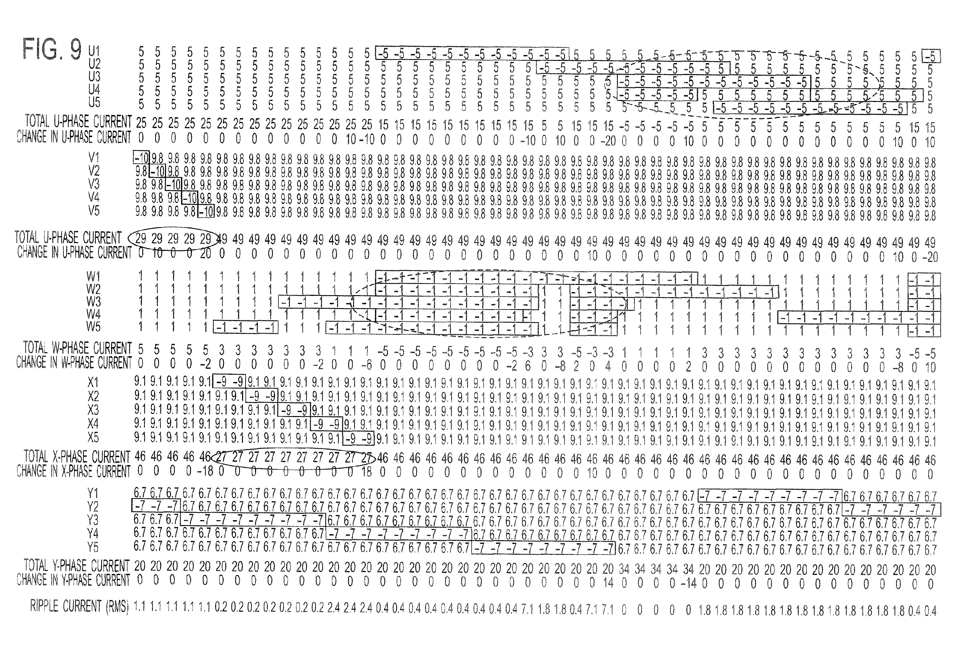

Fig. 4 is an explanatory view showing transition of each phase current. Fig. 5 is an explanatory view showing transition of pulse current flowing through each phase and each leg during one control period at timing A. Herein, the current values shown in Fig. 5 are 1/10 of actual values for the sake of convenience. The inverter 20 includes five legs for each phase and allows current of up to 100 A through each leg. In other words, in the inverter 20, the phase current for each phase is the sum of currents of five legs, that is, 500 A. In this specification, among the currents flowing through legs, the positive pulse current refers to actual current flowing through a leg in such a direction that the capacitor C is discharged. The negative pulse current refers to actual current flowing through a leg in such a direction that the capacitor C is charged. Moreover, the boxed numerals among the values of currents flowing through the individual legs shown in Fig. 5 represent the values of currents when the lower arms are on, and the unboxed numerals represent the values of currents when the upper arms are on. The same goes with Figs. 6 and 9 described later.

### (First Condition)

it is controlled so that, concerning arbitrary two legs constituting a same phase, for example, the legs of the phases U1 and U2, the time period when negative pulse current is flowing through the leg of the phase U1 and the time period when the positive pulse current is flowing through the leg of the phase U2 overlap each other. The aforementioned relation is satisfied not only between the phases U1 and U2 but also between the phases U2 and U3, between the phases U3 and U4, and between the phases U4 and U5. Furthermore, the above relation is satisfied not only in the phase U but also in the phase V.

### (Second Condition)

It is controlled so that the duty ratios (duty ratio instructions) of arbitrary two legs constituting a same phase, for example, the legs of the phases U1 and U2, are equal to each other. The aforementioned relation is satisfied not only in the relation between the phases U1 and U2 but also in the relations between the phases U2 and U3, between the phases U3 and U4, and between the phases U4 and U5. Furthermore, the above relation is satisfied not only in the phase U but also in the phase V.

### (Third Condition)

In a certain phase, for example, in the phase U, the width (period) of positive pulse current of the phase U1 is long and the width (period) of the negative pulse current is short. In this case, it is controlled so that the short period of the negative pulse current of the phase U2 falls within the long period of the positive pulse current of the phase U1. The above-described relation is satisfied not only between the phases U1 and U2 but also between the phases U2 and U3, between the phases U3 and U4, and between the phases U4 and U5. Furthermore, the above relation is satisfied not only in the phase U but also in the phase V.

### (Fourth Condition)

It is configured so that the U-phase current, or, the time period when the sum of the currents of the phases U1 to U5 is minimized and the V-phase current, or the time period when the sum of the currents of the phases V1 to V5 is minimized overlap each other. In other words, it is controlled so that the time period when the total ripple current of a certain phase is minimized does not overlap the time period when the total ripple current of another phase is minimized.

### (Fifth Condition)

At time A1, the lower arms of the legs of the phases U3, V2, and W1 to W5 are turned on among the legs of the three phases. On the other hand, at time A2, the lower arms of the legs of the phases U4, V2, and W1 to W5 are turned on among the legs of the thee phases. It is controlled so that among all the legs provided for the inverter 20, the number of legs whose upper or lower arms are on remains constant throughout one control period. Moreover, in order to keep constant the number of legs whose lower arm is on during one control period in all the three phases, it is controlled so that the number of arms through which negative pulse current flows or the number of arms through which positive pulse current flows is substantially constant throughout one control period.

### (Sixth Condition)

As shown in a period surrounded by a solid line ellipse, the time when the on-state of the lower arm changes to the on-state of the upper arm in the phase U1 corresponds to the time when the on-state of the upper arm changes to the on-state of the lower arm in the phase U2. As shown in a period surrounded by a dashed-line ellipse, the time when the on-state of the lower arm changes to the on-state of the upper arm in the phase U2 corresponds to the time when the on-state of the upper arm changes to the on-state of the lower arm in the phase U3. As apparent from this form, it is controller so that in a same phase, the period when the positive pulse current flows through one leg (the leg of the phase U1, for example) ends at the same time as the period when the positive pulse current flows through another leg (the leg of the phase U2, for example) starts. In other words, it is controlled so that the positive pulse current flowing through one leg is continuous with the positive pulse current flowing through another leg. The above-described relation is satisfied not only in the relation between the phases U1 and U2 but also in the relations between the phases U2 and U3, between the phases U3 and U4, and between the phases U4 and U5. Furthermore, the above relation is satisfied not only in the phase U but also in the legs of the phases V1 to V5 of the phase V.

Based on the aforementioned viewpoints, the timing control unit 36 changes the phase of the driving signal Sp_nm of at least one of m legs of a same phase in any one or some of the phases U, V, and W. The timing control unit 36 outputs driving signals Spa_nm to the inverter 20 at the time of changing the phase. In the inverter 20, the m legs of each phase therefore perform switching operations according to the driving signals Spa_nm, so that predetermined pulse currents flows through the legs at a predetermined time. Accordingly, predetermined voltage is applied to the motor 10, thus driving the motor 10.

As described above, according to the first embodiment, the inverter 20 is configured so that, concerning a first leg (the leg of the phase U1, for example) and a second leg (the leg of the phase U2, for example) among a plurality of legs provided for a certain phase (the phase U, for example), the positive pulse current flowing through the first leg and the negative pulse current flowing through the second leg in one control period overlap each other in timing. In other words, concerning the first and second legs, the controller 30 changes the phases of the duty ratio instructions Sp_nm of the first and second legs so that the positive pulse current flowing through the first leg and the negative pulse current flowing through the second leg overlap each other in timing during one control period.

Herein, Fig. 6 shows a control mode to shift the carrier phase as an example comparative to the control mode according to the first embodiment. Similar to Fig. 5, Fig. 6 shows transition of pulse currents flowing through each leg and each phase during one control period corresponding to the timing A shown in Fig. 4. Herein, the one control to shift the carrier phase, shown in the comparative example, is a control mode in which the duty ratio instructions concerning respective legs included in a same phase are calculated using carriers whose phases are offset from leg to leg.

In a period surrounded by a solid-line ellipse concerning the phases U1 and U2, the lower arms of the phases U1 and U2 are both on. In this period, the negative pulse current of the phase U1 and the positive pulse current of the phase U2 do not overlap each other in timing. Accordingly, the currents in the negative direction of the different legs are superimposed on each other, and the current in the negative direction tends to increase. Moreover, in the period surrounded by a solid-line ellipse concerning the phases U2 and U3 or phases V2 and V3, the time periods when the lower arms of two legs included in a same phase are on overlap each other, in addition, the time periods when the lower arms of two legs included in different phases are on overlap each other. Accordingly, the current in the negative direction tends to be further increased. In this case, the total ripple current of all the legs has an effective value of about 92 Arms, which is large.

In this term, according to the first embodiment, by performing a control as previously described, it is prevented that currents in the negative direction or currents in the positive direction are superimposed on each other. This can reduce the ripple current. In other words, by constituting a same phase of a plurality of legs, it is possible to reduce the operating current of each leg and therefore reduce the ripple current. Moreover, if focusing one control period of a same phase, the period when positive pulse current flows through a certain leg and the period when negative pulse current flows through another leg overlap each other. Accordingly, it is possible to prevent that currents in a same direction are superimposed on each other, thus reducing ripple current.

Moreover, in this embodiment, the duty ratio instructions for the fist and second legs are set equal to each other. This configuration can prevent that the values of currents flowing through the first and second legs are different from each other in one control period. Accordingly, it is possible to prevent degradation of the performance in torque control of the motor 10.

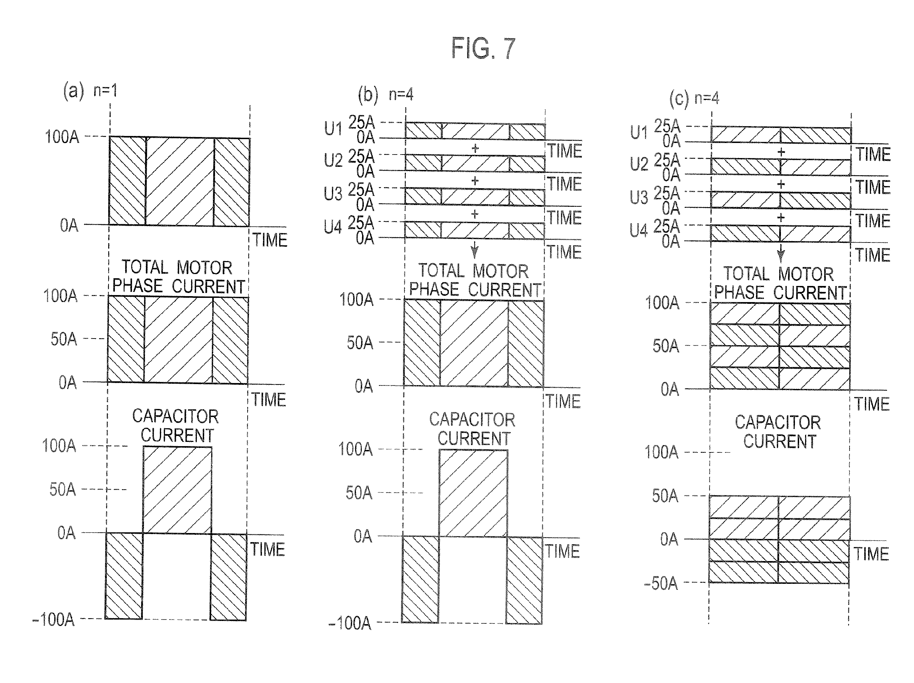

When the duty ratio is 50% (the on and off periods are equal), as shown in Figs. 7(a) to 7(c), as for the phases U1 and U2; the positive pulse current of the phase U1 and the negative pulse current in the phase U2 completely overlap each other (the same applies to the phases U3 and U4). Among Figs. 7(a) to 7(c), in Fig. 7(a), it is assumed that in an inverter, each of the three phases is composed of one leg, showing current flowing through a leg of the phase U (the upper view), total current of the phase U (the middle view), and current flowing through the capacitor C. On the other hand, in Figs. 7(b) and 7(c), it is assumed that in each inverter, each of the three phases is composed of four legs, schematically showing current flowing through each leg of the phase U (the upper view), the total current of the phase U (the middle view), and current flowing through the capacitor C. Herein, Fig. 7(b) shows a state where the phases of the duty ratio instructions for each leg are not changed, and Fig. 7(c) shows a state where the phases of the duty ratio instructions of some legs are changed as described in the first embodiment. In the drawing, each hatched region indicated by diagonal lines sloping up to the right shows a state where the upper arm is on, and the hatched region indicated by lines sloping down to the right shows a state where the lower arm is on.

Furthermore, in the first embodiment, the controller 30 compares the period of positive pulse current flowing through the first leg with the period of the negative pulse current flowing through the second leg and then changes the phases of the duty ratio instructions so that the long one of the compared periods of pulse current falls within the short one. With such a configuration, at any duty ratio varied at each control period, superimposition of currents in the negative direction or currents in the positive direction can be prevented, thus reducing ripple current.

Still furthermore, in the first embodiment, the controller 30 changes the phases of the duty ratio instructions so that the period when the total ripple current of a certain phase is minimized and the period when the total ripple current of another phase is minimized do not overlap each other. With such a configuration, it is possible to prevent superimposition of currents in the negative direction or positive direction in the legs constituting the respective phases, thus reducing the ripple current.

Furthermore, in the first embodiment, the controller 30 changes the phases of the duty ratio instructions so that the positive pulse current flowing through the first leg is continuous with the positive pulse current flowing through the second leg. With such a configuration, it is possible to prevent ripple current caused between the positive pulse current in the first leg and the positive pulse current in the second leg.

With such a configuration, it is controlled so that the number of arms driven to transmit the positive pulse current or the number of arms driven to transmit negative pulse current remains substantially constant along time transition during one control period. This reduces the superimposition of the currents in the positive or negative direction in the legs constituting each phase. Accordingly, the sum of ripple currents can be reduced. For example, in the example shown in Fig. 6, at time B1, the lower arms of the legs of the phases U4, V4, and W1 to W5 are on among the legs of the three phases. On the other hand, at time B2, the lower arms of the legs of the phases U4, U5, V4, V5, and W1 to W5 are on among the legs of the three phases. The total number of lower arms which are on in the three phases changes in such a manner. However, according to the first embodiment, the aforementioned situation can be prevented.

Still furthermore, in the first embodiment, the motor 10 is an electro-mechanical motor integrally including the motor 10 and inverter 20. This electro-mechanical motor includes a plurality of windings and a plurality of bridge circuits composed of a plurality of legs. The output point of each leg is connected to the corresponding winding. For example, in the configuration which is divided into separate mechanical and electrical units, even if the legs provided for a same phase are connected in parallel, the phases of the pulse currents of the legs concerning a same phase cannot be offset from each other. On the contrary, if the pulse currents are not synchronized, the current could be concentrated to one of the legs. In this case, it is necessary to synchronize the timings in accordance with the operation characteristics of the semiconductor switches provided with arms, thus complicating the control. In this regard, according to the first embodiment, the motor 10 can be composed as an electro-mechanical motor. The plurality of windings divided in each phase can be therefore connected to the plurality of bridge circuits of the inverter 20. Accordingly, by using a polyphase power converter including a number of legs connected in parallel for each phase, the aforementioned control can be effectively implemented.

In the first embodiment, the inverter 20 includes legs the number of which is an integral multiple of the number of motor slots. With this configuration, the number of legs of a same phase can be increased, and the current flowing through each leg can be reduced. It is therefore possible to effectively prevent occurrence of ripple current.

### (Second Embodiment)

Hereinafter, a description is given of a motor control system according to a second embodiment of the present invention. The motor control system according to the second embodiment differs from that of the first embodiment in including phase windings of five phases and an inverter 20 including m legs for each phase, the m legs being connected in parallel. The description of the same matters as those of the first embodiment is omitted, and hereinafter, the description focuses on the differences.

The motor 10 is a permanent magnet synchronous motor including n (n: a natural number not less than 1) phase windings which are wound around teeth of the stator (in this embodiment, a five-phase motor having phases U, V, W, X, and Y). Each phase winding is divided into m parts. The windings concerning a same phase are properly wound around predetermined stator cores. Hereinafter, m sets of elements of the phase U (the winding and later-described leg) are indicated as phases U1, U2, ..., Um, and elements of phases V to Y are also indicated as phases V1 to Y1. V2 to Y2, ... , and Vm to Ym, respectively. In the second embodiment, the description is given for m=5.

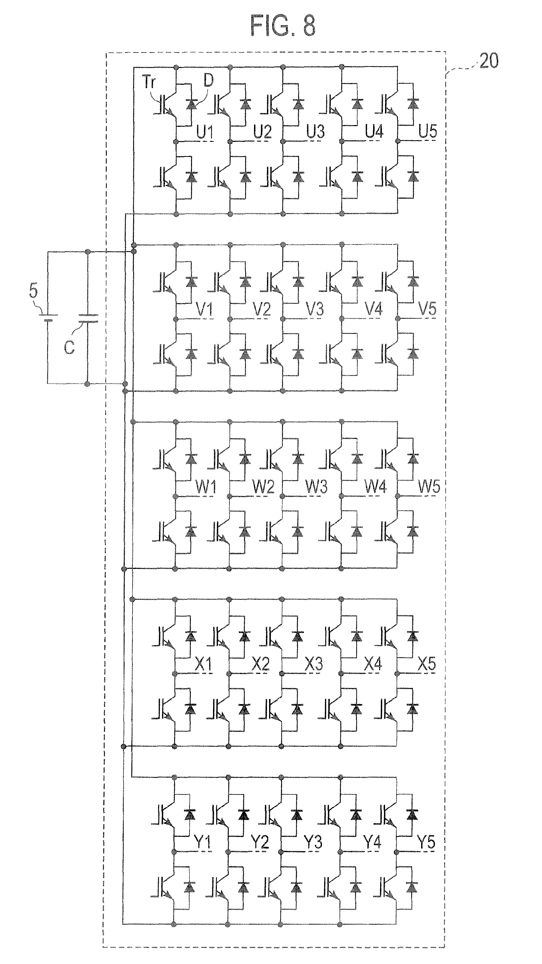

As shown in Fig. 8, the inverter 20 includes five legs for each of the phases U, V, W, X, and Y. the legs being connected in parallel. To be specific, the phase U is provided with five legs corresponding to the phases U1 to U5. Similarly, the phases V, W, X, and Y are each provided with five legs corresponding to the phases V1, W1, X1, and Y1 to V5, W5, X5, and Y5, respectively. The five legs of each phase are connected in parallel. Each of the legs constituting each phase includes an upper arm connected to a bus on the positive electrode side of the power supply 5 and a lower arm connected to a bus on the negative electrode side of the power supply 5, the upper and lower arms being connected in series. Each of the arms constituting each leg is mainly composed of a semiconductor switch capable of controlling one-way conduction (a switching element such as a transistor including IGBT, for example). The semiconductor switch is connected to a free-wheeling diode in inversed parallel.

Even in an electro-mechanical motor having the aforementioned configuration, similarly to the first embodiment, the timing control unit 36 of the controller 30 changes the phase of the driving signal Sp_nm of at least one of the five legs of a same phase in any one or some of the phases U to Y.

Fig. 9 is an explanatory view showing transition of pulse currents flowing through each leg and each phase during one control period at a certain time. In Fig 9, the instantaneous current of the phase U is 50 A; the phase V, 98 A; the phase W, 10 A; the phase X, -91 A; and the phase Y, 67 A. The values of current shown in Fig. 9 are 1/10 of actual values.

In the phase V with large current, it is controlled so that negative pulse current flowing through the leg of the phases and positive pulse current flowing through the leg of the phase V2 overlap each other in timing. The above-described relation is satisfied not only between the phases V1 and V2 but also between the phases V2 and V3, between the phases V3 and V4, and between the phases V4 and V5. Furthermore, the same relation is satisfied not only in the phase V but also in the phases X and Y, which involve large current.

In this case, it is controlled so that the time period when the total ripple current of the phase V is minimized (the period surrounded by a solid-line ellipse in the drawing) does not overlap the time period when the total ripple current of the phase X is minimized (the period surrounded by another solid-line ellipse in the drawing).

Moreover, in order to reduce the total ripple currents of the phases U to Y, it is controlled so that the time period of negative pulse current of the phase U, which is a phase involving the second smallest current (the period surrounded by a dashed-line ellipse in the drawing), does not overlap the period of negative pulse current of the phase W, which is a phase involving the smallest current.

According to the second embodiment, in one control period, the time period when positive pulse current flows through a leg (a first leg) of a certain phase and the time period when negative pulse current flows through another leg (a second leg) of the same phase overlap each other. With such a configuration, similarly to the first embodiment, the superimposition of currents in the negative or positive direction is prevented, thus reducing the ripple current.

Moreover, in the second embodiment, the controller 30 changes the phases of the duty ratio instructions so that positive pulse current flowing through the first leg is continuous with positive pulse current flowing through the second leg. With such a configuration, it is possible to prevent ripple current which could be generated between the positive pulse current of the first leg and the positive pulse current of the second leg.

Furthermore, in the second embodiment, the controller 30 changes the phases of the duty ratio instructions so that the time period when total ripple current of a certain phase is minimized and the time period when total ripple current of another phase is minimized does not overlap each other. With such a configuration, superimposition of currents in the negative or positive direction is reduced concerning the legs constituting the respective phases, thus reducing ripple current.

Hereinabove, the motor control system according to the embodiments of the present invention is described. However, it is obvious that the present invention is not limited to the aforementioned embodiments and can be variously modified without departing from the spirit of the invention. For example, the above embodiments describe about the motor control system outputting the output power of the power converter to the motor. This is shown by way of example, and the power conversion system which converts inputted power and outputs the same also functions as a part of the present invention. Moreover, the power conversion system can be applied, in addition to the inverter which receives DC current and outputs AC power, to a power converter such as a DC/DC converter.

This application is based upon and claims the benefit of priority to Japanese Patent Application No. 2010-158419, filed on July 13, 2010, the entire contents of which are incorporated herein by reference.

### APPLICABILITY

According to a power conversion system, the phases of the calculated duty ratio instructions are changed so that the time period when positive current flows through a first leg and the time period when negative pulse current flows through a second leg overlap each other in one control period. This can prevent the superimposition of currents in a same direction. It is therefore possible to reduce ripple current. Accordingly, the controller of a power inverter according to the present invention is industrially applicable.

### REFERENCE SIGNS LIST

| | |
|---|---|
| 5 | POWER SUPPLY |
| 10 | MOTOR |
| 11 | ROTOR |
| 12 | STATOR |
| 20 | INVERTER |
| 30 | CONTROLLER |
| 31 | TORQUE CONTROL UNIT |
| 32 | CURRENT CONTROL UNIT |
| 33 | dq/THREE-PHASE CONVERSION UNIT |
| 34 | MODULATION FACTOR INSTRUCTION GENERATION UNIT |
| 35 | PWM CONTROL UNIT |
| 36 | TIMING CONTROL UNIT |
| 37 | THREE-PHASE/dq CONVERSION UNIT |
| 38 | ROTATIONAL CALCULATION UNIT |
| 40 | POSITION SENSOR |
| 41 | CURRENT SENSOR |

## Claims

1. A power conversion system converting inputted electric power into outputs in a plurality of phases, the system comprising:
a power converter including a plurality of legs corresponding to each of the phases, each leg having upper and lower arms; and
a controller individually controlling the upper and lower arms of each leg to control pulse current flowing through the leg, wherein
concerning a first leg and a second leg among a plurality of legs provided for a certain one of the phases, time period when positive pulse current flows through the first leg and time period when negative pulse current flows through the second leg overlap each other in one control period.

2. The conversion system according to claim 1, wherein the controller includes:
a calculation unit calculating a duty ratio instruction for each leg in the one control period for each phase; and
a phase adjustment unit changing a phase of the duty ratio instruction calculated by the calculation unit, wherein
the phase adjustment unit changes the phases of the duty ratio instructions to allow the time period when positive pulse current flows through the first leg and the time period when negative pulse current flows through the second leg to overlap each other in the one control period.

3. The power conversion system according to claim 2. wherein the calculation unit sets the duty ratio instructions of the first and second legs equal to each other.

4. The power conversion system according to claims 2 or 3. wherein the phase adjustment unit compares the time period when positive pulse current flows through the first leg with the time period when negative pulse current flows through the second leg and changes the phases of the duty ratio instructions to cause the shorter one of the compared time periods to fall within the other time period.

5. The power conversion system according to any one of claims 2 to 4, the system further comprising: a smoothing capacitor connected to each phase and each leg of the phase, wherein
the phase control unit changes the phases of the duty ratio instructions to prevent a time period when total ripple current of a certain one of the plurality of phases is minimized and a time period when total ripple current of another phase is minimized from overlapping each other.

6. The power conversion system according to any one of claims 2 to 5, wherein the phase control unit changes the phases of the duty ratio instructions to start the time period when positive pulse current flows through the second leg at the same time as the time period when positive pulse current flows through the first leg ends.

7. The power conversion system according to any one of claims 1 to 6, further comprising a motor driven by polyphase power outputted from the power converter, wherein
the motor is a electro-mechanical motor which includes the motor and the power converter integrated with each other, and
the electro-mechanical motor includes a plurality of windings and a plurality of bridge circuits composed of the plurality of legs, and output points of the legs are individually connected to the corresponding windings.

8. The power conversion system according to claim 7, wherein the number of the legs included in the power converter is an integral multiple of the number of motor slots.

9. The power conversion system according to any one of claims 1 to 8, wherein among all the legs included in the power converter, the number of legs in which any one of the upper and lower arms is on remains constant throughout the one control period.

10. The power conversion system according to any one of claims 2 to 9, wherein the phase control unit changes the phases of the duty ratio instructions to cause the time when on state of the lower arm turns into on state of the upper arm in the first leg to correspond to the time when on state of the upper arm turns into on state of the lower arm in the second leg and cause the time when on state of the upper arm turns into on state of the lower arm in the first leg to correspond to the time when on state of the lower arm turns into on state of the upper arm in the second leg.

11. A method of controlling a power converter which is provided with a plurality of legs for each phase to convert electric power inputted to the power converter into outputs in a plurality of phases, each leg including upper lower arms, the method comprising:
calculating a duty ratio instruction for each of the legs in one control period for each phase, and
changing phases of the calculated duty ratio instructions so that, concerning first and second legs among the plurality of legs provided for a certain one of the phases, a time period when positive pulse current flows through the first leg and a time period when negative pulse flows through the second leg overlap each other in the one control period.

12. A power conversion system, comprising:
power conversion means for converting inputted electric power into outputs in a plurality of phases by using a plurality of legs, each leg including upper and lower arms; and
controlling means for controlling the upper and lower arms of each leg to control pulse current flowing through the leg, wherein
concerning first and second legs among the plurality of legs provided for a certain one of the phases, a time period when positive pulse current flows through the first leg and a time period when negative pulse flows through the second leg overlap each other in the one control period.
